# DEMANDE DE BREVET EUROPEEN

(11) **EP 4 374 691 A1**
(43) Date de publication de la demande: **29.05.2024**
(21) Numéro de dépôt: 23193265.8
(22) Date de dépôt: 24.08.2023
(51) Int. Cl.: A01M 7/00

(54) **SYSTEME DE PULVERISATION D'UN PRODUIT POUR ENGIN AGRICOLE ET PROCEDE ASSOCIE**

(30) Priorité: 28.11.2022 FR 2212424
(71) Demandeur: Exel Industries, 51200 Epernay (FR)
(72) Inventeur: SEJOURNE, Bastien, 51190 AVIZE (FR)
(74) Mandataire: Argyma

(57) **Abrégé**

La présente invention vise un système de pulvérisation d'un produit pour engin agricole (2), comportant au moins une buse de pulvérisation du produit associée à une zone pulvérisable (4) et un système de commande, ledit système de pulvérisation comportant en outre un moyen de mesure de cap configuré pour mesurer le cap dudit système de pulvérisation, le système de commande étant configuré pour comparer ledit cap mesuré avec un cap prédéterminé correspondant à une plage de valeurs entre une première borne et une seconde borne, ledit système de commande étant configuré pour arrêter la pulvérisation du produit lorsque le cap mesuré du système est supérieur à ladite première borne ou lorsque le cap mesuré du système est inférieur à ladite seconde borne, la seconde borne étant inférieure à la première borne.

## Description

### DOMAINE TECHNIQUE

La présente invention concerne le domaine de la pulvérisation agricole et, plus précisément, de la pulvérisation à l'aide d'un engin agricole. L'invention concerne en particulier un système de pulvérisation commandé en fonction de données acquises au moyen d'un dispositif de mesure de la trajectoire de l'engin agricole et de capteurs configurés pour détecter la végétation d'une zone à traiter, ainsi qu'un procédé associé.

### ETAT DE LA TECHNIQUE

La pulvérisation agricole a pour objectif d'appliquer à des cultures différents produits de traitement visant de manière générale à augmenter leur croissance, leur rendement et/ou leur qualité. Les produits de traitement peuvent notamment être utilisés pour lutter contre les maladies, l'invasion d'insectes ou de parasites, et apporter les éléments nutritifs nécessaires au bon développement des cultures.

Dans le domaine de la pulvérisation de grandes cultures, il est connu des systèmes de pulvérisation comprenant, de manière classique, au moins une cuve agencée pour contenir un produit de traitement, éventuellement dilué, une rampe de pulvérisation comportant une pluralité de tronçons de pulvérisation équipés chacun d'une buse ou d'une pluralité de buses de pulvérisation, et un circuit hydraulique reliant la cuve aux différents tronçons de pulvérisation. La rampe de pulvérisation s'étend généralement selon un axe transversal par rapport à une direction longitudinale selon laquelle l'engin agricole évolue sur la parcelle. Le circuit hydraulique peut notamment comporter une pompe agencée pour aspirer du produit de traitement dans la cuve et le conduire vers la rampe de pulvérisation, et un régulateur de pression agencé pour maintenir la pression dans le circuit hydraulique à une pression seuil prédéterminée. Chaque buse de pulvérisation est agencée pour pulvériser du produit de traitement sur une largeur prédéterminée de la parcelle définie selon l'axe transversal. Chaque buse, ou chaque pluralité de buses, est ainsi associée à une zone pulvérisable au sol, correspondant sensiblement à une forme géométrique, telle qu'un disque, un ovale ou, approximativement un rectangle, sur laquelle il est possible de délivrer du produit de traitement. La zone pulvérisable associée à chaque buse ou à une pluralité de buses évolue bien entendu avec le déplacement du système de pulvérisation.

Dans un objectif de réduire la quantité de produit de traitement appliquée, les systèmes de pulvérisation ont été adaptés afin de permettre un traitement localisé des parcelles.

Par traitement localisé, on entend une pulvérisation du produit uniquement sur les zones de la parcelle nécessitant effectivement un traitement. À cet effet, chaque tronçon de pulvérisation est commandé, par exemple au moyen d'un distributeur agencé pour prendre une position d'ouverture, dans laquelle une circulation du produit est possible depuis la cuve jusqu'à la buse de pulvérisation correspondante, et une position de fermeture, dans laquelle ladite circulation est bloquée. Les différents distributeurs peuvent notamment être commandés individuellement. De façon générale, chaque tronçon de pulvérisation peut être commandé de façon individuelle au moyen d'une unité de commande adaptée.

En outre, dans le domaine de la pulvérisation viticole, il est connu des panneaux récupérateurs de produit phytosanitaire formant des écrans autour des buses de pulvérisation, permettant de récupérer une partie du produit phytosanitaire qui n'est pas fixé sur les végétaux à traiter. En particulier, l'engin agricole supporte au moins deux panneaux récupérateurs par l'intermédiaire d'un mécanisme de suspension articulé. Lorsque l'engin agricole circule selon une direction et un sens d'avancement, les panneaux récupérateurs sont disposés de part et d'autre des végétaux à traiter, permettant de pulvériser sur le feuillage des végétaux un traitement approprié.

Au surplus, dans le domaine de la pulvérisation arboricole, il est connu des systèmes de pulvérisation disposés sur des engins agricoles configurés pour circuler entre les rangés de végétaux à pulvériser. Lorsque l'engin agricole circule selon une direction et un sens d'avancement entre deux rangés de végétaux à pulvériser, le système de pulvérisation est disposé de sorte à pulvériser de part et d'autre du système de pulvérisation, sur chacune des rangées de végétaux à traiter, permettant de pulvériser sur le feuillage des végétaux un traitement approprié.

Chacun de ces systèmes de pulvérisation permet de détecter la végétation et d'activer la pulvérisation en conséquence.

Toutefois, ces systèmes de pulvérisation ne permettent pas d'empêcher les pulvérisations intempestives, c'est-à-dire la pulvérisation de végétaux non souhaitée, et/ou la double pulvérisation, la pulvérisation répétée ou trop longue de végétaux.

Il est également connu des systèmes de pulvérisation équipés d'un système de localisation par satellite, communément appelé « GPS », permettant de cartographier la zone à pulvériser et d'arrêter la pulvérisation lorsque l'engin agricole sort de cette zone.

Toutefois, le système de localisation par satellite est très couteux.

La présente invention vise donc à résoudre les problèmes susmentionnés en proposant un système de pulvérisation d'un produit pour engin agricole dont le changement de cap de l'engin agricole entraine l'arrêt de la pulvérisation, empêchant ainsi la pulvérisation de végétaux non souhaitée, et/ou la double pulvérisation, la pulvérisation répétée ou trop longue de végétaux, tout en restant commode et économique.

### PRESENTATION DE L'INVENTION

Pour parvenir à ce résultat, la présente invention concerne un système de pulvérisation d'un produit pour engin agricole, comportant au moins une buse de pulvérisation du produit associée à une zone pulvérisable et un système de commande, ledit système de pulvérisation comportant en outre un moyen embarqué de mesure de cap configuré pour mesurer le cap dudit système de pulvérisation, le système de commande étant configuré pour comparer ledit cap mesuré avec un cap prédéterminé correspondant à une plage de valeurs de cap comprise entre une première borne et une seconde borne, ledit système de commande étant configuré pour forcer l'arrêt de la pulvérisation du produit lorsque le cap mesuré du système est supérieur à ladite première borne ou lorsque le cap mesuré du système est inférieur à ladite seconde borne, la seconde borne étant inférieure à la première borne.

Ainsi, lorsqu'un engin agricole, en bout de rangée va effectuer un virage, le cap du système de pulvérisation va changer. Si le cap mesuré est supérieur à la première borne ou si le cap mesuré du système est inférieur à la seconde borne, le système de commande génère un signal de fermeture qu'il envoie aux buses de sorte que les buses se ferment et arrêtent la pulvérisation. Ainsi, dans la zone de jonction qui relie deux rangées entre elles, le système de commande arrête la pulvérisation. La végétation en bout de la première rangée n'est pas pulvérisée pendant le virage de l'engin agricole, évitant ainsi le surdosage de produit pulvérisé.

Avantageusement, le système de pulvérisation comporte en outre au moins un capteur ultrasons ayant un champ de détection, le système de commande étant configuré pour traiter les informations acquises par chaque capteur dans leur champ de détection respectif de façon à déterminer la présence ou l'absence de végétation dans la zone pulvérisable de chaque buse de pulvérisation et pour arrêter la pulvérisation du produit depuis ladite buse de pulvérisation en l'absence de végétation.

Lorsque le système de commande détecte l'absence de végétation dans le champ de détection des capteurs, il génère et transmet un signal de fermeture aux buses. Ce signal de fermeture, commande la fermeture des buses et donc l'arrêt de la pulvérisation. Cela permet d'éviter de pulvériser du produit lorsqu'il n'y a pas de végétation et donc de ne pas gâcher de produit et de faire des économies.

Avantageusement, le moyen embarqué de mesure du cap comporte au moins un gyroscope configuré pour mesurer le cap dudit système de pulvérisation.

Avantageusement encore, le moyen embarqué de mesure du cap comporte un accéléromètre et un magnétomètre configurés pour mesurer le cap et/ou la vitesse dudit système de pulvérisation.

Avantageusement encore, le système de pulvérisation comporte au moins deux capteurs, chaque capteur étant configuré pour être relié à une roue avant de l'engin agricole et pour déterminer un changement de cap dudit système de pulvérisation.

Préférentiellement, le système de pulvérisation comporte en outre un moyen de temporisation configuré pour mesurer la durée pendant laquelle le cap mesuré du système de pulvérisation est supérieur à ladite première borne ou lorsque le cap mesuré du système est inférieur à ladite seconde borne, pour la comparer à une durée prédéterminée et pour, tant que la durée mesurée est inférieure à la durée prédéterminée, inhiber l'arrêt forcé de la pulvérisation, l'arrêt forcé de la pulvérisation ne se produisant que lorsque la durée mesurée atteint la durée prédéterminée.

Le moyen de temporisation mesure la durée pendant laquelle le cap mesuré est supérieur à la première borne ou la durée pendant laquelle le cap mesuré du système est inférieur à la seconde borne. Lorsque la durée mesurée atteint la durée prédéterminée, le moyen de temporisation génère et transmet un signal au système de commande. Le système de commande génère alors un signal de fermeture qu'il envoie aux buses de sorte que les buses se ferment et arrêtent la pulvérisation. Au contraire, lorsque la durée mesurée n'atteint pas la durée prédéterminée, le moyen de temporisation est configuré pour laisser activée la pulvérisation. La temporisation permet l'arrêt de la pulvérisation par le système de pulvérisation tout en évitant les arrêts intempestifs dus par exemple à un sol irrégulier, une rangée présentant un défaut de trajectoire, etc.

Préférentiellement encore, le système de commande permet un actionnement et/ou un arrêt forcé de la pulvérisation.

Ainsi, un arrêt ou un actionnement de la pulvérisation peut être demandé par l'utilisateur au travers du système de commande quel que soit le cap mesuré et quelle que soit la végétation détectée.

La présente invention concerne également un procédé de pulvérisation d'un produit à pulvériser au moyen d'un système de pulvérisation tel que précédemment décrit, porté ou trainé par un engin agricole, le procédé comprenant :
- la mesure d'un cap du système de pulvérisation par le moyen embarqué de mesure du cap ;
- la comparaison, par le système de commande, du cap mesuré avec le cap prédéterminé correspondant à une plage de valeurs entre une première borne et une seconde borne ;
et dans lequel le système de commande :
- force l'arrêt de la pulvérisation du produit lorsque le cap mesuré du système est supérieur à ladite première borne ou lorsque le cap mesuré du système est inférieur à ladite seconde borne, la seconde borne étant inférieure à la première borne.

Avantageusement, le moyen de temporisation :
- mesure la durée pendant laquelle le cap mesuré est supérieur à ladite première borne ou lorsque le cap mesuré du système est inférieur à ladite seconde borne ;
- compare à une durée prédéterminée ladite durée mesurée ;
- inhibe l'arrêt forcé de la pulvérisation tant que la durée mesurée est inférieure à la durée prédéterminée ; et
- autorise l'arrêt forcé de la pulvérisation lorsque la durée mesurée atteint la durée prédéterminée.

Avantageusement encore, le système de commande du système de pulvérisation :
- traite les informations acquises dans le champ de détection de l'au moins un capteur ; et
- détermine la présence ou l'absence de végétation à pulvériser ;
ledit système de commande forçant l'arrêt de la pulvérisation du produit lorsque le cap mesuré est supérieur à ladite première borne ou lorsque le cap mesuré du système est inférieur à ladite seconde borne, même si le système de commande a déterminé la présence de végétation.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation très schématique d'un engin agricole comportant un système de pulvérisation de l'invention, pulvérisant du produit sur de la végétation, le cap dudit système de pulvérisation étant représenté ;
La figure 2 est une représentation très schématique du système de pulvérisation de l'engin agricole de la figure 1 ;

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un système de pulvérisation 1 agricole. Le système de pulvérisation 1 est porté par un engin agricole 2 permettant de pulvériser sur des cultures 10 différents produits de traitement visant de manière générale à augmenter leur croissance, leur rendement et/ou leur qualité.

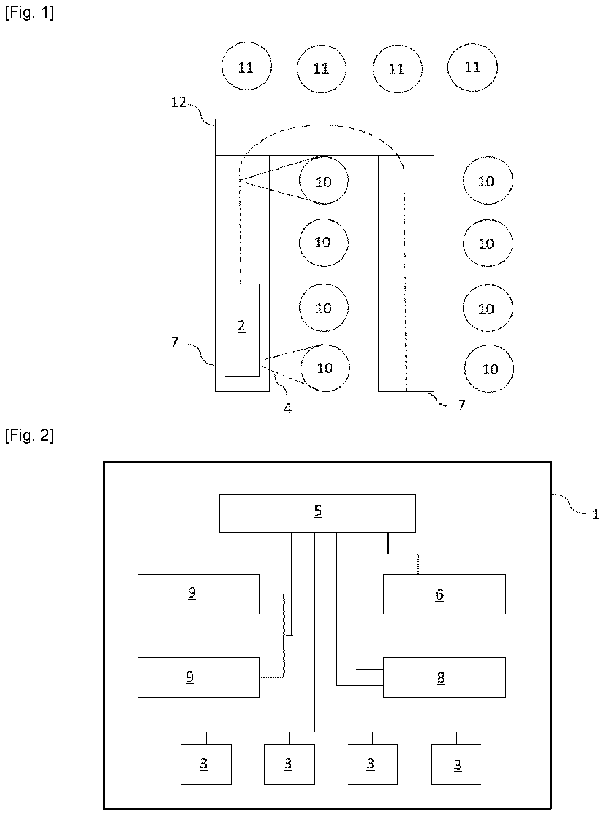

La figure 1 représente de manière schématique l'engin agricole sur une parcelle comportant des cultures sur lesquelles il est nécessaire de pulvériser du produit. Les cultures portant la référence 10 correspondent aux cultures qu'il faut pulvériser et les cultures portant la référence 11 correspondent aux cultures qu'il ne faut pas pulvériser, notamment parce qu'elles ne font pas partie de la parcelle.

Le système de pulvérisation 1 de l'invention, notamment schématisé sur la figure 2, comporte au moins une buse de pulvérisation 3, généralement un ensemble de buses 3.

L'ensemble de buses de pulvérisation 3 est aménagé sur le système de pulvérisation 1 et chaque buse ou groupe de buses est associé à une zone pulvérisable 4, visible sur la figure 1.

Les buses 3 de l'ensemble de buses sont ainsi soit indépendantes les unes des autres ; soit forment des groupes de buses et sont réparties par tronçon de pulvérisation.

Le système de pulvérisation 1 comporte un système de commande 5.

Le système de pulvérisation 1 comporte en outre un moyen embarqué de mesure du cap 6. Le moyen embarqué de mesure du cap 6 est configuré pour mesurer le cap du système de pulvérisation 1.

Le système de commande 5 est configuré pour comparer le cap mesuré par le moyen embarqué de mesure du cap 6 avec un cap prédéterminé. Le cap prédéterminé peut être préalablement enregistré dans le système de commande 5, c'est-à-dire avant l'utilisation du système de pulvérisation 1, par exemple en correspondance avec une trajectoire prédéterminée sur une parcelle à traiter. Le cap prédéterminé peut également être mis à jour dans le système de commande 5, en fonction de chaque rangée 7 de la parcelle à traiter.

En particulier, le cap prédéterminé peut correspondre à une plage de valeurs de cap comprise entre une première borne et une seconde borne.

Par exemple, le cap prédéterminé peut correspondre à une plage angulaire de cap allant de -15 degrés à +15 degrés par rapport à une valeur centrale correspondant à un objectif de cap. Cela correspond à une plage angulaire de 30 degrés. Lorsque le cap mesuré par le moyen embarqué de mesure du cap 6 est hors de cette plage, par exemple le cap mesuré étant à plus de 16 degrés de l'objectif de cap, alors le système de commande 5 détermine que le cap mesuré est différent du cap prédéterminé puisqu'il est supérieur à la première borne. Au contraire, lorsque le cap mesuré par le moyen embarqué de mesure du cap 6 est dans de cette plage, alors le système de commande 5 détermine que le cap mesuré correspond au cap prédéterminé.

Le système de commande 5 est en outre configuré pour arrêter la pulvérisation lorsque le cap mesuré par le moyen embarqué de mesure du cap 6 du système de pulvérisation 1 est différent du cap prédéterminé, qu'il n'entre pas dans la plage de valeur entre la première borne et la seconde borne du cap prédéterminé.

En particulier, le système de commande 5 est configuré pour arrêter la pulvérisation du produit lorsque le cap mesuré du système est supérieur à la première borne ou lorsque le cap mesuré du système est inférieur à la seconde borne, la seconde borne étant inférieure à la première borne.

Par exemple, lorsque le système de commande 5 détermine que le cap mesuré est différent du cap prédéterminé, alors il peut générer un signal de fermeture qu'il envoie aux buses 3 de sorte que les buses 3 se ferment et arrêtent la pulvérisation. Au contraire, lorsque le système de commande 5 détermine que le cap mesuré correspond au cap prédéterminé, il peut générer un signal de commande qu'il envoie aux buses 3 de sorte que les buses 3 s'ouvrent et activent ou laisse activée la pulvérisation.

Dans un premier mode de réalisation, le moyen embarqué de mesure du cap 6 comporte un gyroscope configuré pour mesurer le cap du système de pulvérisation 1.

Dans un deuxième mode de réalisation, le moyen embarqué de mesure du cap 6 comporte un gyroscope, un accéléromètre et un magnétomètre configurés pour mesurer le cap et/ou la vitesse dudit système.

Dans un troisième mode de réalisation, le moyen embarqué de mesure du cap 6 comporte deux capteurs, chaque capteur étant relié à une roue avant de l'engin agricole 2 et permettant de déterminer un changement de cap dudit système de pulvérisation.

En particulier, dans ce troisième mode de réalisation chaque capteur peut déterminer la vitesse de la roue de l'engin agricole à laquelle il est associé. Si une roue est plus rapide que l'autre, un changement de cap est inévitable.

Par ailleurs, le moyen embarqué de mesure du cap 6 peut permettre de déterminer le sens d'avancement de l'engin agricole 2.

En tout état de cause, selon l'invention, le moyen embarqué de mesure du cap 6 du système de pulvérisation est embarqué dans le système de pulvérisation, de sorte que, conformément à l'invention, on ne met pas en oeuvre un système externe tel qu'un système de positionnement par satellite de type GPS ou GPS différentiel.

Le système de pulvérisation 1 comporte en outre un moyen de temporisation 8.

Le moyen de temporisation 8 est configuré pour mesurer la durée pendant laquelle le cap mesuré du système de pulvérisation 1 est supérieur à la première borne ou lorsque le cap mesuré du système est inférieur à la seconde borne. Le moyen de temporisation 8 est configuré pour ensuite comparer la durée mesurée à une durée prédéterminée. Tant que la durée mesurée est inférieure à la durée prédéterminée, le moyen de temporisation 8 est configuré pour inhiber l'arrêt forcé de la pulvérisation. Lorsque la durée mesurée atteint la durée prédéterminée, le moyen de temporisation 8 est configuré pour autoriser l'arrêt forcé de la pulvérisation.

La durée prédéterminée peut être préalablement enregistrée dans le moyen de temporisation 8 ou dans le système de commande 5, c'est-à-dire avant l'utilisation du système de pulvérisation. La durée prédéterminée peut également être mise à jour dans le système de commande 5 à chaque rangée 7 de la parcelle.

Lorsque le système de commande 5 détermine que le cap mesuré par le moyen embarqué de mesure du cap 6 est supérieur à ladite première borne ou que le cap mesuré du système est inférieur à ladite seconde borne, il génère et transmet un signal de comptage au moyen de temporisation 8. Le moyen de temporisation 8 chronomètre alors la durée pendant laquelle le cap mesuré est supérieur à ladite première borne ou la durée pendant laquelle le cap mesuré du système est inférieur à ladite seconde borne. Lorsque la durée chronométrée atteint la durée prédéterminée, le moyen de temporisation 8 génère et transmet au système de commande 5 un signal.

Ainsi, le moyen de temporisation 8 mesure la durée pendant laquelle le cap mesuré est supérieur à ladite première borne ou la durée pendant laquelle le cap mesuré du système est inférieur à ladite seconde borne. Lorsque la durée chronométrée ou mesurée atteint la durée prédéterminée, le moyen de temporisation 8 génère et transmet un signal au système de commande 5. Le système de commande 5 génère alors un signal de fermeture qu'il envoie aux buses 3 de sorte que les buses 3 se ferment et arrêtent la pulvérisation. Au contraire, lorsque la durée chronométrée ou mesurée n'atteint pas la durée prédéterminée, le moyen de temporisation ne génère pas de signal, le système de commande 5 détermine que le cap mesuré correspond au cap prédéterminé et génère un signal de commande qu'il envoie aux buses 3 de sorte que les buses 3 s'ouvrent et activent ou laisse activée la pulvérisation.

L'ouverture des buses 3 permet la pulvérisation des cultures, tandis que la fermeture des buses 3 arrête et empêche la pulvérisation. Ainsi, lorsque le système de commande 5 envoie le signal de commande aux buses 3, l'arrêt de la pulvérisation est inhibé. Lorsque le système de de commande 5 envoie le signal de fermeture aux buses 3, la pulvérisation est arrêtée.

La temporisation permet l'arrêt de la pulvérisation par le système de pulvérisation tout en évitant les arrêts intempestifs dus par exemple à un sol irrégulier, une rangée présentant un défaut de trajectoire, etc.

Le système de commande 5 peut également permettre un actionnement et/ou un arrêt forcé de la pulvérisation. En particulier, l'utilisateur du système de pulvérisation 1 peut actionner une commande générant un signal de commande permettant l'ouverture forcée des buses 3 et donc la pulvérisation, ou au contraire générant un signal de fermeture permettant la fermeture forcée des buses 3 et donc l'arrêt de la pulvérisation.

Le système de pulvérisation 1 peut comporter en outre au moins un capteur ultrasons 9 auquel est associé un champ de détection.

Avantageusement, le système de pulvérisation 1 peut comporter une pluralité de capteurs ultrasons 9, chacun associé à un champ de détection.

Le système de commande 5 est configuré pour traiter les informations acquises par chaque capteur dans leur champ de détection respectif, de façon à déterminer la présence ou l'absence de végétation dans la zone pulvérisable de chaque buse de pulvérisation 3.

Lorsque le système de commande 5 détecte la présence de végétation dans le champ de détection des capteurs, il génère et transmet un signal de commande aux buses 3. Ce signal de commande, commande l'ouverture des buses 3 et donc la pulvérisation.

Lorsque le système de commande 5 détecte l'absence de végétation dans le champ de détection des capteurs, il génère et transmet un signal de fermeture aux buses 3. Ce signal de fermeture, commande la fermeture des buses 3 et donc l'arrêt de la pulvérisation.

Toutefois, lorsque le système de commande 5 détecte la présence de végétation et qu'à la fois il détermine que le cap mesuré par le moyen embarqué de mesure du cap 6 est supérieur à la première borne ou inférieur à la seconde borne et que la durée chronométrée ou mesurée pendant laquelle le cap mesuré est supérieur à la première borne ou inférieur à la seconde borne atteint la durée prédéterminée, le système de commande 5 génère un signal de fermeture qui commande la fermeture des buses 3 et donc l'arrêt de la pulvérisation.

Ainsi, en référence à la figure 1, lorsque l'engin agricole 2 avance dans la rangée 7 de la parcelle, les capteurs 9 permettent au système de commande 5 de détecter la présence ou l'absence de végétation dans leur champ de détection. En cas de présence de culture à pulvériser 10, le système de commande 5 génère et transmet le signal de commande aux buses 3, commandant la pulvérisation de la culture à pulvériser 10. En cas d'absence de culture à pulvériser, le système de commande 5 génère et transmet le signal de fermeture aux buses 3, arrêtant la pulvérisation. Cela permet d'éviter de pulvériser du produit lorsqu'il n'y a pas de végétation et donc de ne pas gâcher de produit et de faire des économies.

En bout de rangée 7, l'engin agricole 2 doit effectuer un virage dans une zone de jonction 12 pour passer dans la rangée suivante. Toutefois, lors du virage la végétation se trouvant en bout de la première rangée sera pulvérisée en continue pendant le virage mais également lorsque l'engin agricole 2 est au début de la rangée suivante. Cette pulvérisation en continue cause un surdosage de produit sur cette végétation. Au surplus, lorsque l'engin agricole est dans la zone de jonction 12, la végétation 11 est aussi pulvérisée alors que nous ne souhaitons pas la pulvériser.

Ainsi, l'engin agricole 2, en bout de rangée 7 va commencer à effectuer son virage. Le cap du système de pulvérisation va alors changer. Si la durée pendant laquelle le cap mesuré est supérieur à la première borne ou inférieur à la seconde borne atteint la durée prédéterminée, le système de commande 5 génère un signal de fermeture qu'il envoie aux buses 3 de sorte que les buses 3 se ferment et arrêtent la pulvérisation. Ainsi, dans la zone de jonction 12, même si les capteurs 9 détectent la végétation 11, le système de commande 5 force l'arrêt de la pulvérisation. Par le même temps, la végétation 10 en bout de la première rangée 7 n'est pas pulvérisée pendant le virage de l'engin agricole 2, évitant ainsi le surdosage.

Le système de pulvérisation 1 peut permettre de compter les rangées 7 de la parcelle. En effet, chaque entrée dans une zone de jonction 12 indique une fin de rangée 7 et/ou le début d'une rangée suivante. Ainsi, à chaque coupure de pulvérisation due à un changement de cap, le nombre de rangée peut être incrémenté d'une unité.

De plus, le système de pulvérisation 1 peut permettre de faire une cartographie de la parcelle. En particulier, il peut permettre de déterminer, grâce aux capteurs 9, l'emplacement de la végétation et l'emplacement du manque de végétation. Le système 1 peut aussi permettre de déterminer le traçage du travail de pulvérisation effectué par l'engin agricole 2.

Grâce au système 1, il est possible de compter le nombre de rangées de la parcelle et de la cartographier sans pour autant être équipé d'un système de positionnement par satellite de type GPS.

L'invention concerne également un procédé de pulvérisation d'un produit à pulvériser au moyen d'un système de pulvérisation 1 porté ou trainé par un engin agricole. Dans le procédé de pulvérisation, le moyen embarqué de mesure du cap 6 mesure le cap du système de pulvérisation 1 et compare le cap mesuré avec le cap prédéterminé correspondant à une plage de valeur entre une première borne et une seconde borne, et dans lequel le système de pulvérisation 1 arrête la pulvérisation du produit lorsque le cap mesuré du système de pulvérisation 1 est supérieur à ladite première borne ou lorsque le cap mesuré du système de pulvérisation 1 est inférieur à ladite seconde borne.

De plus, le moyen de temporisation 8 peut mesurer la durée pendant laquelle le cap mesuré est supérieur à la première borne ou lorsque le cap mesuré du système est inférieur à la seconde borne, comparer à une durée prédéterminée la durée mesurée, inhiber l'arrêt forcé de la pulvérisation tant que la durée mesurée est inférieure à la durée prédéterminée et autoriser l'arrêt forcé de la pulvérisation lorsque la durée mesurée atteint la durée prédéterminée.

En outre, le système de commande 5 peut traiter les informations acquises dans le champ de détection des capteurs et déterminer la présence ou l'absence de végétation à pulvériser. Le système de commande 5 arrête la pulvérisation du produit lorsque le cap mesuré est supérieur à la première borne ou lorsque le cap mesuré du système est inférieur à la seconde borne, même si le système de commande 5 a déterminé la présence de végétation.

On notera par ailleurs que l'invention n'est pas limitée aux modes de réalisation décrit précédemment. Il apparaîtra en effet à l'homme du métier que diverses modifications peuvent être apportées au mode de réalisation décrit ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Système de pulvérisation (1) d'un produit pour engin agricole (2), comportant au moins une buse de pulvérisation (3) du produit associée à une zone pulvérisable (4) et un système de commande (5), ledit système de pulvérisation (1) comportant en outre un moyen embarqué de mesure de cap (6) configuré pour mesurer le cap dudit système de pulvérisation (1), le système de commande (5) étant configuré pour comparer ledit cap mesuré avec un cap prédéterminé correspondant à une plage de valeurs de cap comprise entre une première borne et une seconde borne, ledit système de commande (5) étant configuré pour forcer l'arrêt de la pulvérisation du produit lorsque le cap mesuré du système est supérieur à ladite première borne ou lorsque le cap mesuré du système est inférieur à ladite seconde borne, la seconde borne étant inférieure à la première borne.

2. Système de pulvérisation (1) selon la revendication précédente, comportant en outre au moins un capteur ultrasons (9) ayant un champ de détection, le système de commande (5) étant configuré pour traiter les informations acquises par chaque capteur ultrasons (9) dans leur champ de détection respectif de façon à déterminer la présence ou l'absence de végétation (10) dans la zone pulvérisable (4) de chaque buse de pulvérisation (3) et pour arrêter la pulvérisation du produit depuis ladite buse de pulvérisation (3) en l'absence de végétation (10).

3. Système de pulvérisation (1) selon la revendication précédente, dans lequel le moyen embarqué de mesure du cap (6) comporte au moins un gyroscope configuré pour mesurer le cap dudit système de pulvérisation (1).

4. Système de pulvérisation (1) selon l'une quelconque des revendications précédentes, dans lequel le moyen embarqué de mesure du cap (6) comporte un accéléromètre et un magnétomètre configurés pour mesurer le cap et/ou la vitesse dudit système de pulvérisation (1).

5. Système de pulvérisation (1) selon l'une quelconque des revendications précédentes, comportant au moins deux capteurs, chaque capteur étant configuré pour être relié à une roue avant de l'engin agricole (2) et pour déterminer un changement de cap dudit système de pulvérisation (1).

6. Système de pulvérisation (1) selon l'une quelconque des revendications précédentes, comportant en outre un moyen de temporisation (8) configuré pour mesurer la durée pendant laquelle le cap mesuré du système de pulvérisation (1) est supérieur à ladite première borne ou lorsque le cap mesuré du système est inférieur à ladite seconde borne, pour la comparer à une durée prédéterminée et pour, tant que la durée mesurée est inférieure à la durée prédéterminée, inhiber l'arrêt forcé de la pulvérisation, l'arrêt forcé de la pulvérisation ne se produisant que lorsque la durée mesurée atteint la durée prédéterminée.

7. Système de pulvérisation (1) selon l'une quelconque des revendications précédentes, dans lequel le système de commande (5) permet un actionnement et/ou un arrêt forcé de la pulvérisation.

8. Procédé de pulvérisation d'un produit à pulvériser au moyen d'un système de pulvérisation (1) selon l'une des revendications 1 à 7, porté ou trainé par un engin agricole (2), le procédé comprenant :
- la mesure d'un cap du système de pulvérisation (1) par le moyen embarqué de mesure du cap (6) ;
- la comparaison, par le système de commande (5), du cap mesuré avec le cap prédéterminé correspondant à une plage de valeurs entre une première borne et une seconde borne ;
et dans lequel le système de commande (5) :
- force l'arrêt de la pulvérisation du produit lorsque le cap mesuré du système est supérieur à ladite première borne ou lorsque le cap mesuré du système est inférieur à ladite seconde borne, la seconde borne étant inférieure à la première borne.

9. Procédé de pulvérisation selon la revendication précédente, dans lequel le moyen de temporisation (8) :
- mesure la durée pendant laquelle le cap mesuré est supérieur à ladite première borne ou lorsque le cap mesuré du système est inférieur à ladite seconde borne ;
- compare à une durée prédéterminée ladite durée mesurée ;
- inhibe l'arrêt forcé de la pulvérisation tant que la durée mesurée est inférieure à la durée prédéterminée ; et
- autorise l'arrêt forcé de la pulvérisation lorsque la durée mesurée atteint la durée prédéterminée.

10. Procédé de pulvérisation selon l'une quelconque des revendications 8 à 9, dans lequel le système de commande (5) du système de pulvérisation (1) :
- traite les informations acquises dans le champ de détection de l'au moins un capteur ultrasons (9) ; et
- détermine la présence ou l'absence de végétation à pulvériser ;
ledit système de commande (5) forçant l'arrêt de la pulvérisation du produit lorsque le cap mesuré est supérieur à ladite première borne ou lorsque le cap mesuré du système est inférieur à ladite seconde borne, même si le système de commande (5) a déterminé la présence de végétation.
